# FASCICULE DE BREVET EUROPEEN

(11) **EP 1 539 363 B1**
(45) Date de publication et mention de la délivrance du brevet: **18.06.2008**
(21) Numéro de dépôt: 03780265.9
(22) Date de dépôt: 11.09.2003
(51) Int. Cl.: B05B 3/10

(54) **DISPOSITIF DE PULVERISATION DE LIQUIDE ET MACHINE AGRICOLE EQUIPEE D' AU MOINS UN DISPOSITIF**
VORRICHTUNG ZUR ZERSTÄUBUNG EINER FLÜSSIGKEIT UND LANDWIRTSCHAFTLISCHE MASCHINE MIT MINDENSTENS EINER SOLCHEN VORRICHTUNG
LIQUID SPRAYING DEVICE AND AGRICULTURAL MACHINERY EQUIPPED WITH AT LEAST ONE DEVICE

(30) Priorité: 11.09.2002 FR 0211257; 04.03.2003 FR 0302650; 12.06.2003 FR 0307062
(43) Date de publication de la demande: 15.06.2005
(73) Titulaire: Tordable S.A., 33190 La Reole (FR)
(72) Inventeur: TORDABLE, Luis, 33490 Caudrot (FR)
(74) Mandataire: Fantin, Laurent
(86) Numéro de dépôt international: PCT/FR2003/050052
(87) Numéro de publication internationale: WO 2004/030828

(56) Documents cités:
- FR-A- 963 996
- FR-A- 978 637
- FR-A- 1 048 708
- FR-A- 1 360 193
- FR-A- 2 410 515
- GB-A- 2 118 866
- US-A- 1 974 538
- US-A- 3 552 652

## Description

La présente invention se rapporte à un dispositif de pulvérisation de liquide, notamment d'un liquide de traitement des cultures ou des sols, ainsi qu'à une machine agricole, appelée pulvérisateur, équipée d'au moins un dispositif selon l'invention.

Dans l'agriculture, notamment dans la vigne, on a recours à des appareils de pulvérisation pour répandre sur les cultures ou sur le sol un liquide de traitement, tel qu'un liquide phytosanitaire, désherbant ou autre.

Le traitement est d'autant plus efficace que la surface à traiter est recouverte de manière uniforme par le liquide.

En contrepartie, il est nécessaire de réduire la quantité de produit utilisé par unité de surface compte tenu du coût des produits de traitement.

Pour obtenir le meilleur compromis, il convient de pulvériser le liquide de traitement sous forme de gouttelettes de petite taille de manière à obtenir une surface traitée la plus importante pour une quantité de liquide donnée.

Il existe de nombreux appareils, appelés pulvérisateurs, permettant la pulvérisation d'un liquide de traitement comme par exemple les documents FR963996, US3552652 et FR1360193.

Une première catégorie d'appareils comprend des buses d'éjection. Dans ce cas, un liquide est propulsé via un ajutage sous forme d'une fine fente. Hormis le fait qu'il est nécessaire d'utiliser une pompe pour propulser le liquide à travers l'ajutage, ce mode d'éjection ne donne pas satisfaction car le liquide est propulsé sous forme d'un jet constitué de gouttelettes d'un diamètre relativement important.

Une seconde catégorie d'appareils utilise un flux d'air pour véhiculer les gouttelettes. La présente invention se rapporte plus précisément à ce type d'appareils.

Les dispositifs existants comprennent une surface fixe disposée dans le flux d'air, avec une arête du côté aval de l'écoulement, sur laquelle est projeté le liquide de traitement de manière à créer sur ladite surface un revêtement de liquide qui progresse vers l'arête et est ensuite entraîné sous forme de gouttelettes par l'écoulement d'air. En variante, le liquide n'est pas projeté contre la surface mais il se diffuse sur la surface, étant entraîné par effet venturi.

Même si ce mode de réalisation permet d'obtenir des gouttelettes d'un diamètre inférieur au mode de réalisation précédent, il ne donne pas satisfaction car il ne permet pas de créer des gouttelettes suffisamment petites pour optimiser le traitement tant en qualité de dépôt qu'en quantité.

On connaît également des dispositifs de pulvérisation montés sur des avions comportant une surface de diffusion mise en rotation grâce à une hélice. Toutefois, ces dispositifs ne peuvent pas s'adapter à un engin terrestre car le flux d'air ne permet pas de faire tourner la surface de diffusion suffisamment vite pour obtenir des micro-gouttelettes.

Aussi, la présente invention vise à pallier les inconvénients des dispositifs de l'art antérieur en proposant un dispositif de pulvérisation susceptible de générer des micro-gouttelettes d'un diamètre inférieur à celles générées par les dispositifs existants, ledit dispositif étant par ailleurs de conception simple et fiable.

A cet effet, la présente invention a pour objet un dispositif de pulvérisation d'un liquide comportant un support de diffusion, disposé dans un flux gazeux, avec au moins une surface de diffusion sur laquelle est susceptible de s'écouler le liquide à pulvériser, présentant une arête au niveau de laquelle sont formées les gouttelettes entraînées par le flux gazeux, ladite surface de diffusion étant entraînée en rotation par des moyens de mise en rotation, caractérisé en ce que les moyens de mise en rotation comprennent une vis présentant au niveau de sa surface extérieure au moins un filet.

D'autres caractéristiques et avantages ressortiront de la description qui représente un mode de réalisation préférentiel, description donnée à titre d'exemple uniquement, en référence aux dessins annexés qui représentent :
- figure 1, une vue en élévation d'une machine agricole appelée pulvérisateur, équipée du dispositif de pulvérisation selon l'invention,
- figure 2, une coupe schématique d'un dispositif illustrant le principe de l'invention,
- figure 3, une coupe longitudinale d'un mode de réalisation,
- figures 4A et 4B, des coupes du dispositif illustrant la soupape respectivement en position ouverte et en position fermée,
- figure 5, une coupe longitudinale d'une autre variante de réalisation,
- figure 6, une coupe longitudinale d'une autre variante de réalisation,
- figure 7, une coupe longitudinale d'une autre variante de réalisation, et
- figure 8, une vue en perspective illustrant l'élément rotatif comprenant au moins une surface de diffusion.

Un pulvérisateur 10 est utilisé notamment en agriculture pour répandre sous forme de fines gouttelettes un liquide de traitement, tel qu'un produit phytosanitaire du type fongicide, bactéricide ou autre, sur une zone à traiter par exemple des cultures ou le sol.

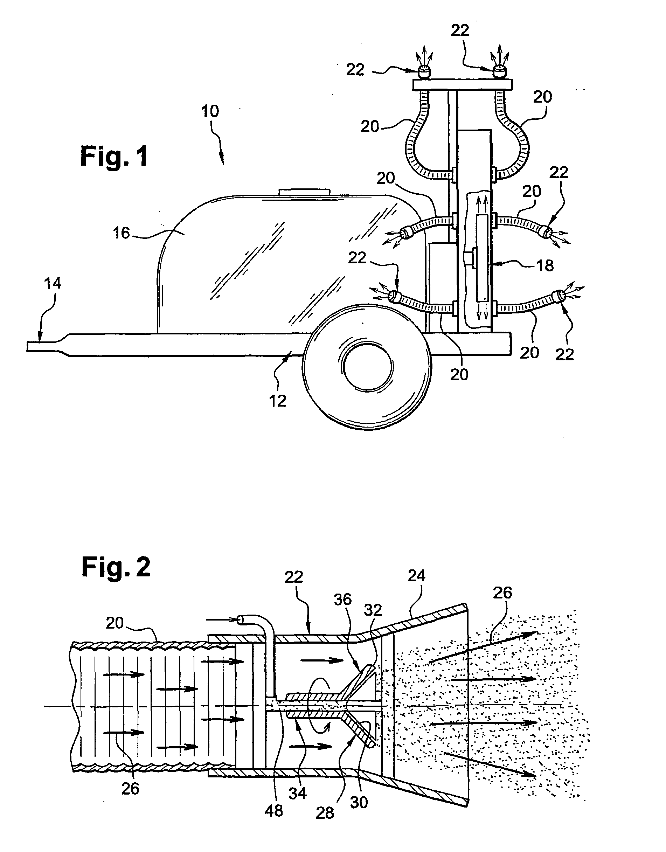

Selon le mode illustré par la figure 1, un pulvérisateur 10 peut être rapporté sur un châssis roulant 12 susceptible d'être relié via un attelage 14 à un tracteur non représenté. En variante, un pulvérisateur peut être rapporté directement sur un engin motorisé tel qu'un enjambeur ou analogue.

Le pulvérisateur 10 comprend un réservoir 16 dans lequel le liquide de traitement est stocké, des moyens 18 pour générer un flux gazeux, notamment d'air, au moins un conduit 20 pour canaliser le flux d'air et le diriger vers la zone à traiter, ainsi qu'un dispositif de pulvérisation 22 dans le flux d'air, de préférence au niveau de chaque extrémité du ou des conduits 20.

Le réservoir 16, les moyens 18 pour générer un flux d'air ainsi que les conduits ne sont pas décrits plus en détail car à la portée de l'homme de l'art.

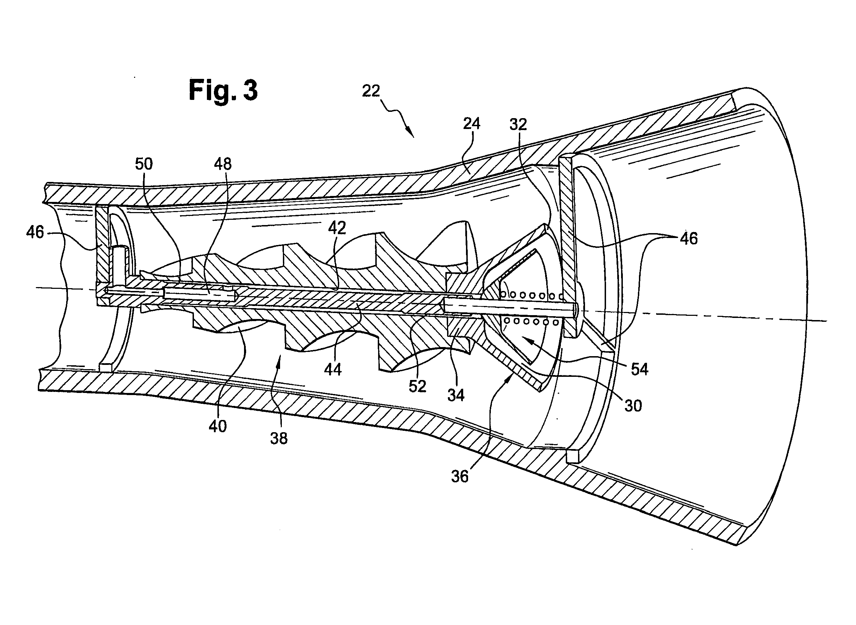

Le dispositif de pulvérisation 22 est maintenant décrit au regard des figures 2 et 3. Ce dispositif comprend un manchon 24, disposé à l'extrémité d'un conduit 20, dans lequel s'écoule le flux d'air 26 ainsi qu'un support de diffusion 28, disposé dans le flux d'air 26, comportant une surface de diffusion 30 sur laquelle est susceptible de s'écouler le liquide à pulvériser, présentant une arête 32 en aval, au niveau de laquelle sont formées les gouttelettes entraînées par le flux d'air, ladite surface de diffusion 30 étant mise en rotation.

Pour une vitesse donnée du flux d'air, la rotation de la surface de diffusion 30 permet d'augmenter la vitesse relative entre le liquide à pulvériser au niveau de l'arête 32 et le flux d'air et d'obtenir ainsi des micro-gouttelettes d'un diamètre inférieur à celles obtenues à l'aide des dispositifs existants non tournant.

La surface de diffusion 30 est de préférence conique ou tronconique, en s'évasant dans le sens de l'écoulement du flux d'air, la partie la plus large terminale constituant l'arête 32. Ce type de forme permet d'obtenir une arête 32 de plus grande longueur, ce qui contribue également à réduire la taille des gouttelettes dès le départ.

La taille des gouttelettes est en effet déjà très réduite au moment ou elles se détachent de ladite arête.

Selon un mode de réalisation préféré, le support de diffusion 28 présente une forme en entonnoir avec une partie cylindrique 34 et une partie évasée 36, la surface intérieure de ladite partie évasée 36 constituant la surface de diffusion 30. L'alimentation en liquide à pulvériser s'effectue au niveau du sommet de la forme évasée 36, le liquide s'écoulant au niveau de la surface de diffusion 30 en direction de l'arête 32 par effet venturi. En variante, la surface extérieure de la partie évasée peut constituer la surface de diffusion 30.

Selon une autre caractéristique de l'invention, le dispositif de pulvérisation comprend des moyens 38 d'entraînement pour mettre en rotation le support de diffusion 28 utilisant le flux d'air.

Selon l'invention, ces moyens 38 d'entraînement, sont solidarisés à la partie cylindrique 34 du support de diffusion, et comprennent une vis 40 présentant au niveau de sa surface extérieure au moins un filet dont la forme permet à l'ensemble d'être mis en rotation grâce au flux d'air 26. Par vis, on entend tout élément ayant un corps sensiblement cylindrique, conique ou tronconique, avec au moins un élément en saillie au niveau de sa surface extérieure sous forme d'une rainure hélicoïdale appelée filet. Cette vis permet à vitesse de flux d'air donnée d'obtenir une vitesse de rotation de la surface de diffusion nettement supérieure.

A titre d'exemple, une vis 40 conique multi-filets, de longueur 125 mm, disposée dans un flux d'air de vitesse 100 Km/h permet d'obtenir une vitesse de rotation de 13 000 tr/min.

Selon une autre caractéristique de l'invention, l'ensemble vis/support de diffusion comprend un alésage 42 dans lequel est susceptible de se loger un axe de rotation 44 sensiblement parallèle au flux d'air 26, un palier hydrodynamique étant prévu entre l'ensemble vis/support de diffusion et l'axe 44.

Avantageusement, le liquide à pulvériser est utilisé pour obtenir le palier hydrodynamique. A cet effet, l'axe 44 fixe et solidarisé à chaque extrémité par l'intermédiaire de bras 46 au manchon 24 comprend un conduit 48 débouchant d'une part, au niveau de l'extrémité amont dudit axe 44, en dehors de l'ensemble vis/support de diffusion de manière à être raccordé à un conduit d'alimentation en liquide à pulvériser, et d'autre part, au niveau de la zone de guidage dudit arbre au droit de l'ensemble vis/support de diffusion.

De préférence, l'axe 44 comprend au niveau de sa surface périphérique, en amont, au moins une gorge de décompression 50 pour limiter les fuites et en aval au moins une gorge 52 en forme de filet de manière à générer une micro-pompe.

Selon une autre caractéristique de l'invention, des moyens pour perturber le flux d'air sont disposés en amont de la surface de diffusion 30. Ces moyens contribuent également à réduire la taille des gouttelettes. Avantageusement, la vis 40 comporte un profil de filet approprié pour perturber le flux d'air et limiter l'apparition de flux laminaires au niveau de l'arête 32.

De ce fait, les perturbations du flux d'air assurent une division supplémentaire des gouttelettes éjectées.

Selon une autre caractéristique de l'invention, le manchon 34 a une forme de tuyère avec dans le sens de l'écoulement du flux 26, un convergent suivi d'un divergent contribuant à augmenter la vitesse du flux d'air en sortie du convergent. Par ailleurs, cette forme combinée au flux perturbé tourbillonnant généré par la vis 40 permet d'envelopper les gouttelettes, de limiter les phénomènes de dispersion et la formation de grosses gouttelettes au niveau de la surface du manchon 34.

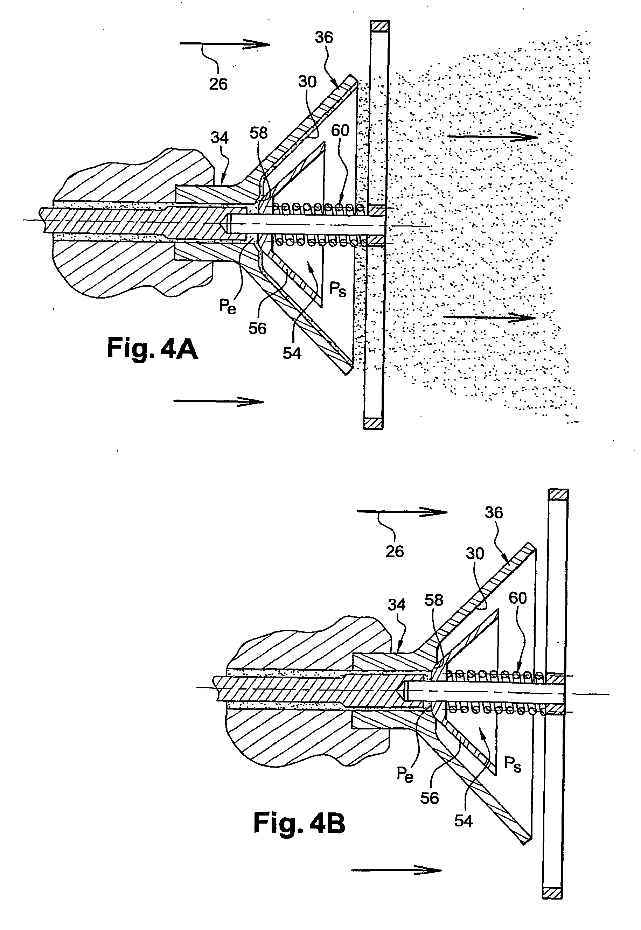

Selon une autre caractéristique de l'invention, le dispositif de pulvérisation comprend des moyens 54 pour contrôler le débit de liquide à pulvériser, illustrés par les figures 4A et 4B.

Avantageusement, l'alésage 42 utilisé pour loger l'axe de rotation 44 débouche au niveau du sommet de la partie évasée 36 et sert de conduit d'alimentation en fluide à pulvériser qui s'écoule par la suite sur la surface de diffusion 30 par effet venturi.

Les moyens 54 pour contrôler le débit comprennent une soupape 56 susceptible d'occuper deux positions extrêmes, une première position dite ouverte, illustrée par la figure 4A, dans laquelle ladite soupape n'obture pas le conduit d'alimentation, dans notre cas l'extrémité de l'alésage 42, et laisse passer le liquide, et une seconde position dite fermée, illustrée par la figure 4B, dans laquelle elle obture le conduit d'alimentation et empêche l'écoulement du liquide.

Les positions intermédiaires correspondent chacune à une valeur de débit variant de zéro à une valeur maximale correspondant respectivement aux positions fermée et ouverte.

Selon un mode de réalisation préféré, illustré par les figures 4A et 4B, l'extrémité de l'alésage 42 comprend un chanfrein ou un usinage formant un siège 58, la soupape 56 montée coulissante sur l'axe de rotation 44 ayant des formes appropriées pour coopérer avec le siège 58 de manière à assurer l'étanchéité en position fermée.

De préférence, des moyens de manoeuvre de la soupape de l'une vers l'autre des positions sont prévus et comprennent des moyens 60 de rappel, par exemple un ressort, qui tendent à plaquer la soupape 56 contre le siège 58. Dans ce cas, la soupape 56 se translate en positon ouverte dès que la pression aval Ps au niveau de la partie évasée devient inférieure à la pression aval Pi du liquide à l'intérieur du conduit d'alimentation.

Cette différence de pression est de préférence engendrée en utilisant la dépression qui se crée à l'intérieur de la partie évasée 46 grâce au flux d'air 26. En effet, à partir d'une certaine vitesse du flux d'air, une dépression se crée au niveau de la partie évasée si bien que la pression aval Ps devient inférieure à la pression amont Pe.

Ainsi, le débit du liquide correspondant à une position de la soupape est proportionnel à la valeur de la différence de pression plus exactement à la valeur de la pression Ps proportionnelle à la vitesse du flux d'air. Cette solution a pour avantage d'être très simple, d'ajuster le débit à la vitesse de l'air et de ne nécessiter aucune pompe ou moteur.

Selon ce mode de réalisation, les moyens 54 de contrôle du débit du liquide peuvent être ajustés en adaptant le tarage des moyens de rappel.

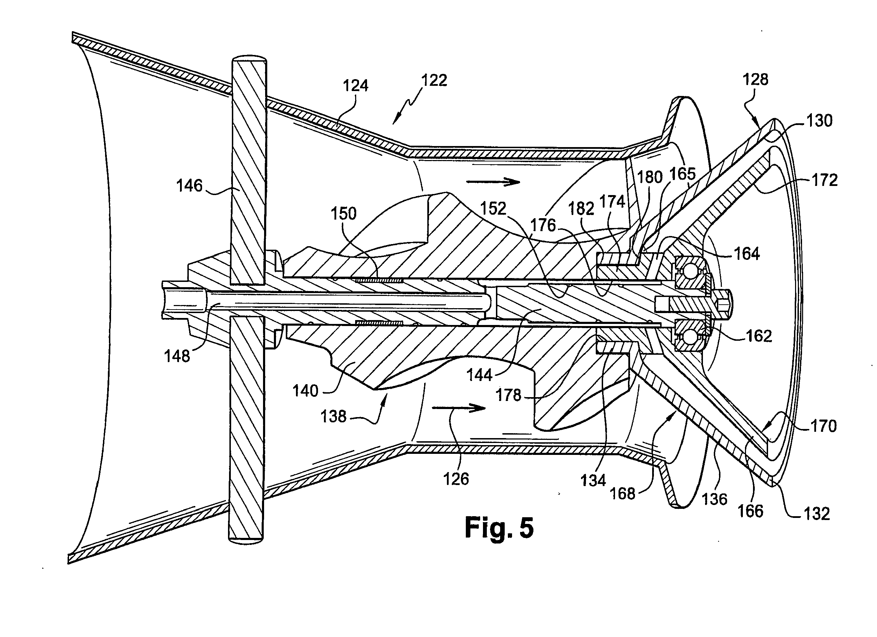

Sur la figure 5, on a représenté une autre variante du dispositif 122 de l'invention, les éléments repris de la variante précédente étant référencés en ajoutant 100 à leur référence.

Ce dispositif comprend un manchon 124 dans lequel s'écoule un flux d'air 126, un axe 144 relié audit manchon via au moins un bras 146 et sur lequel sont montées libres en rotation une vis 140 et une surface de diffusion 130, un conduit 148 ménagé dans l'axe 144 permettant d'acheminer le liquide au droit de la surface de diffusion. Comme précédemment, le filet de la vis 140 permet d'entraîner en rotation la surface de diffusion 130 et de perturber le flux d'air 126.

De manière identique, la surface de diffusion 130 comprend une partie conique ou tronconique 136 se terminant par une arête 132 au niveau de laquelle les fines gouttelettes se détachent. Par ailleurs, comme précédemment, la forme conique de la surface de diffusion permet de générer une dépression qui produit l'écoulement du liquide à pulvériser sans qu'il soit nécessaire de prévoir une pompe pour générer le flux de liquide.

De la même manière, l'axe 144 peut comprendre au niveau de sa surface périphérique, en amont, au moins une gorge de décompression 150, et en aval, au moins une gorge 152 en forme de filet.

Selon le mode de réalisation représenté sur la figure 5, les moyens pour contrôler le débit ne sont pas représentés et peuvent être réalisés par tout moyen approprié tel que des vannes.

Selon les cas, la vis 140 et la surface de diffusion 130 sont montées à rotation sur l'axe 144 grâce à un palier hydrodynamique et/ou des moyens de roulements 162.

Selon une caractéristique de ce mode de réalisation, le liquide à pulvériser est projeté contre la surface de diffusion 130. A cet effet, le liquide s'écoule à partir d'au moins un conduit 164 ne débouchant pas au niveau du sommet 165 de la surface de diffusion 130, comme précédemment, mais décalé par rapport audit sommet de manière à ce que le fluide ne se diffuse pas à partir du conduit 164 jusqu'à la surface de diffusion 130 mais soit projeté sur ladite surface 130 grâce à la force centrifuge de manière à augmenter la fragmentation des gouttelettes.

Selon une autre caractéristique de ce mode de réalisation, le dispositif comprend une seconde surface de diffusion 166 conique ou tronconique concentrique à la première surface de diffusion 130 et disposée à l'intérieur de ladite surface de diffusion 130, le liquide à pulvériser s'écoulant entre lesdites surfaces 130 et 166.

Selon le mode de réalisation décrit, le dispositif comprend un premier ensemble cinématique constitué par le manchon 124, les bras 146 et l'axe 144, et un second ensemble cinématique constitué par la vis 140, un premier élément en forme d'entonnoir 168 comprenant la première surface de diffusion 130 et un second élément en forme d'entonnoir 170, coaxial au premier élément, comprenant la seconde surface de diffusion 166.

Le second élément en forme d'entonnoir 170 comprend une partie évasée 172 de forme conique ou tronconique dont la surface extérieure constitue la seconde surface de diffusion 166 et une partie cylindrique 174 avec un alésage intérieur 176 dans lequel est disposée une partie de l'axe 144, un roulement 162 étant disposé entre l'axe 144 et l'élément 170. Au moins un conduit 164 est ménagé au niveau de la partie cylindrique 174, débouchant d'une part au niveau de la surface extérieure de la partie cylindrique 174 sensiblement à la base de la partie évasée 172 et d'autre part au niveau de l'alésage intérieur 176, un jeu étant prévu entre l'axe 144 et l'élément 170 pour permettre l'écoulement du liquide à pulvériser.

Le premier élément en forme d'entonnoir 168 comprend également une partie évasée 136 dont la surface intérieure constitue la première surface de diffusion 130 et une partie cylindrique 134 avec un alésage intérieur 178, ladite partie cylindrique 134 étant interposée entre un épaulement 180 ménagé au niveau de la surface extérieure de la partie cylindrique 174 du second élément 170 et un alésage 182 ménagé au niveau de l'extrémité de la vis 140.

Selon ce mode de réalisation, le ou les conduits 164 sont décalés par rapport à l'épaulement 180 si bien que le liquide ne peut se diffuser en direction de la première surface de diffusion 130 mais est projeté contre ladite surface.

Dans ce cas, une partie du liquide s'écoulant à partir du ou des conduits 164 est projetée contre la première surface de diffusion 130 alors qu'une autre partie se diffuse sur la seconde surface de diffusion 166. Par l'effet centrifuge, le liquide s'écoulant le long de la seconde surface de diffusion 166 se détache de ladite surface pour venir se projeter contre la première surface de diffusion 130. L'état de surface de la seconde surface de diffusion 166 est adapté pour permettre le détachement du liquide de cette surface et limiter les effets de capillarité.

Cette seconde surface de diffusion 166 permet d'accroître la fragmentation et de réduire encore le diamètre des gouttelettes projetées.

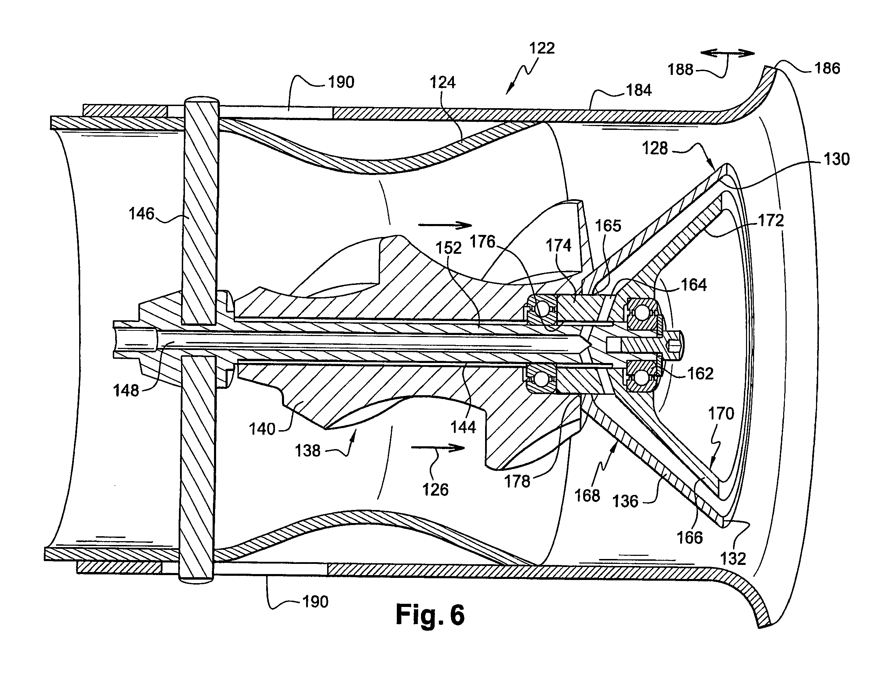

Sur la figure 6, on a représenté une variante légèrement modifiée par rapport à celle de la figure 5. Les éléments identiques portent les mêmes références.

Par rapport à la variante de la figure 5, le guidage des éléments tournants vis /première surface de diffusion / seconde surface de diffusion par rapport à l'axe 144 est obtenu par deux roulements.

Selon cette variante, le conduit 148 est prolongé et débouche via des orifices entre l'axe 144 et la partie cylindrique 174, entre les deux roulements.

Comme précédemment, les conduits 164 sont décalés par rapport au sommet 165 de la première surface de diffusion de manière à ce que le fluide ne se diffuse pas à partir du conduit 164 jusqu'à la surface de diffusion 130 mais soit projeté sur ladite surface 130 grâce à la force centrifuge de manière à augmenter la fragmentation des gouttelettes.

Selon cette variante, le conduit 124 est prolongé par un conduit terminal en forme de tuyère, c'est-à-dire avec une extrémité 186 évasée. Ce conduit terminal 184 peut se translater par rapport au conduit 124, comme illustré par la double flèche 188 si bien que l'extrémité 186 peut être déplacée par rapport à l'arête 132 de la surface de diffusion 130.

A cet effet, le conduit terminal 184 est emmanché sur le conduit 124 et peut coulisser par rapport à ce dernier.

Des trous oblongs 190 sont prévus pour loger les extrémités des bras 146 de manière à limiter la course du conduit terminal 184.

Cet agencement permet d'augmenter ou de réduire la taille du cône de diffusion. Ainsi, si l'extrémité 186 est décalée vers l'aval selon le sens d'écoulement du flux par rapport à l'arête 132, on obtient un cône de diffusion avec un angle au sommet plus faible que si l'extrémité 186 est décalée vers l'amont, comme illustré par la figure 6.

Selon une autre caractéristique de l'invention, les surfaces de diffusion 130, 166 peuvent avoir des états de surface adaptés, notamment très rugueux, de manière à accroître l'éclatement du liquide sous forme de micro-gouttelettes.

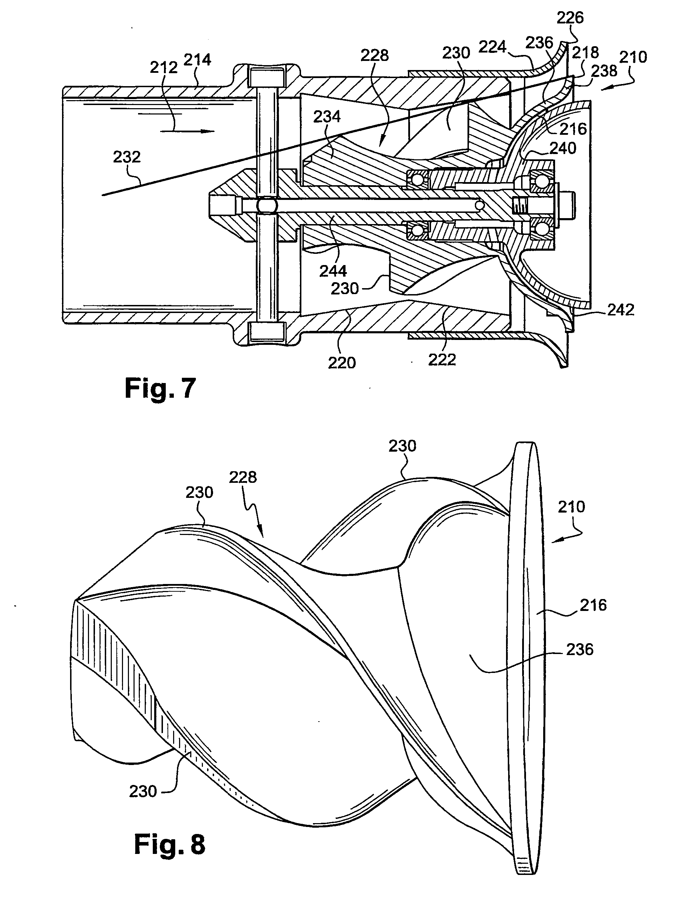

Sur la figure 7, on a représenté une autre variante de réalisation comprenant une vis et une surface de diffusion selon un mode de réalisation préféré et illustré en détail par la figure 8.

Comme précédemment, un dispositif de pulvérisation d'un liquide comprend au moins un support de diffusion 210 disposé dans un flux d'air (gazeux) matérialisé par la flèche 212 et canalisé dans un manchon 214. Le support de diffusion 210 comprend au moins une surface de diffusion 216 sur laquelle est susceptible de s'écouler le liquide à pulvériser, présentant une arête 218 au niveau de laquelle sont formées les gouttelettes entraînées par le flux gazeux 212.

Le manchon 214 possède une forme en tuyère avec dans le sens de l'écoulement du flux 212, un convergent 220 suivi d'un divergent 222. Cet agencement contribue à augmenter la vitesse du flux d'air en sortie du convergent 220.

De préférence, le manchon 214 comprend au niveau de son extrémité une partie mobile 224 en sorte de modifier la position relative de la sortie du flux d'air, matérialisée par l'extrémité 226 du manchon 214, et l'arête 218 pour permettre un réglage du cône de diffusion des micro-gouttelettes.

Le dispositif de pulvérisation comprend des moyens d'entraînement pour mettre en rotation le support de diffusion 210 utilisant le flux d'air. Ces moyens d'entraînement comprennent une vis 228.

Selon un mode de réalisation préféré, la vis 228 comprend plusieurs filets 230, notamment trois filets. Cet agencement contribue à améliorer le rendement du dispositif en augmentant la vitesse de rotation du support de diffusion à flux égal.

Avantageusement, l'enveloppe 232 de la vis c'est à dire la surface imaginaire passant par les sommets des filets 230 est conique. Cet agencement permet d'obtenir une surface de filets en prise avec le flux d'air supérieure ce qui contribue à améliorer le rendement.

Selon une autre caractéristique, l'enveloppe 232 est sensiblement tangente au divergent 222 comme illustré par la figure 7 et le corps 234 de la vis est également conique. Cet agencement permet d'obtenir une section de flux d'air réduite, adaptée au profil de la vis, contribuant également à améliorer le rendement du dispositif de pulvérisation pour un flux gazeux donné, notamment en augmentant la vitesse de rotation de la surface de diffusion tout en conservant une vitesse du flux gazeux importante au niveau de l'arête de la surface de diffusion. A titre comparatif, ce profil de vis permet d'obtenir, à flux gazeux égal, une vitesse de rotation quatre fois supérieure à celle obtenue avec une hélice.

Selon une autre caractéristique de l'invention, au moins une partie du support de diffusion 210 est venue de moulage avec la vis 228. Dans ce cas, la vis 228 comprend au niveau de son extrémité aval selon le sens d'écoulement une portion sensiblement sphérique 236, appelée par la suite coupole, dont la surface intérieure constitue une première surface de diffusion 216 au niveau de laquelle est susceptible de s'écouler le liquide.

Avantageusement, l'extrémité libre 238 de la coupole 236 est évasée afin que la tangente à ladite surface au niveau de l'arête 218 forme un angle non nul avec la direction du flux d'air favorisant la formation des micro-gouttelettes au niveau de ladite arête.

De préférence, le sommet des filets de la vis 228 se prolonge jusqu'à la surface extérieure de la coupole 236, comme illustré par la figure 8.

En variante, on pourrait prévoir un support de diffusion en forme tronconique comme illustré dans les deux demandes antérieures.

Selon une autre caractéristique de l'invention, le support de diffusion 210 comprend une deuxième partie 240 avec une surface extérieure formant une seconde surface de diffusion 242. La deuxième partie 240 présente une forme qui coopère avec la coupole 236 afin que les deux surfaces de diffusion 216 et 242 soient faiblement espacées. Avantageusement au moins l'une des surfaces de diffusion et de préférence les deux présentent un état de surface (rugosité) adapté permettant au fluide de ricocher entre lesdites surfaces favorisant sa micronisation.

Le support de diffusion et la vis sont montés à rotation sur un axe 244 disposé sensiblement au niveau de l'axe du manchon 214 et solidaire dudit manchon comme pour les variantes précédentes.

Bien entendu, l'invention n'est pas limitée au mode de réalisation décrit mais en couvre les variantes. Ainsi, les moyens pour perturber le flux ainsi que des moyens de contrôle du débit du liquide peuvent être modifiés dans leur forme.

Par rapport à l'art antérieur, il n'est pas nécessaire de mettre le liquide sous haute pression avant de le projeter sur une surface de diffusion pour obtenir de fines gouttelettes. En général, la dépression générée par la forme conique ou en coupole des surfaces de diffusion suffit pour faire écouler le liquide à travers le conduit d'alimentation. En complément, on peut prévoir seulement une pompe de faible pression pour accompagner le liquide vers les surfaces de diffusion sachant que cette pompe n'a aucun effet sur la micronisation des gouttelettes.

Enfin, ce dispositif de pulvérisation peut être utilisé dans d'autres domaines lorsqu'il est nécessaire de pulvériser grâce à un flux gazeux un liquide sous forme de micro-gouttelettes. Il peut être utilisé pour diffuser un liquide vers le bas sans que des gouttes de diamètre important n'apparaissent.

De plus, compte tenu de ce que le flux d'air est à portée réduite, il est possible de traiter des plants en bandes tels que des plantes maraîchères sans les dégrader par le souffle. Quant à la micronisation obtenue, elle permet là encore d'optimiser les traitements.

L'invention couvre aussi la machine agricole équipée d'au moins un de ces dispositifs.

## Revendications

1. Dispositif de pulvérisation d'un liquide comportant un support de diffusion (28, 128, 210), disposé dans un flux gazeux (26, 126, 212), avec au moins une surface de diffusion (30, 130, 216) sur laquelle est susceptible de s'écouler le liquide à pulvériser, présentant une arête (32,132, 218) au niveau de laquelle sont formées les gouttelettes entraînées par le flux gazeux (26, 126, 212), ladite surface de diffusion (30, 130, 216) étant entraînée en rotation par des moyens de mise en rotation, **caractérisé en ce que** les moyens de mise en rotation comprennent une vis (40, 140, 228) présentant au niveau de sa surface extérieure au moins un filet (230).

2. Dispositif selon la revendication 1, **caractérisé en ce que** la vis comprend plusieurs filets (230).

3. Dispositif selon la revendication 1 ou 2, **caractérisé en ce que** la vis présente une enveloppe (232) conique.

4. Dispositif selon l'une quelconque des revendications 1 à 3, **caractérisé en ce qu'**il comprend un manchon (214) canalisant le flux gazeux (212) en forme de tuyère, avec dans le sens de l'écoulement du flux (212), un convergent (220) suivi d'un divergent (222).

5. Dispositif selon la revendication 4, **caractérisé en ce que** la vis présente une enveloppe (32) sensiblement tangente au divergent (222).

6. Dispositif selon la revendication 5, **caractérisé en ce que** la vis présente un corps (234) conique.

7. Dispositif selon l'une quelconque des revendications 1 à 6, **caractérisé en ce qu'**au moins une partie du support de diffusion (210) est venue de moulage avec la vis (228).

8. Dispositif selon la revendication 7, **caractérisé en ce que** la vis (228) comprend au niveau de son extrémité aval selon le sens d'écoulement du flux gazeux (212) une portion sensiblement sphérique (236), appelée par la suite coupole, dont la surface intérieure constitue une première surface de diffusion (216) au niveau de laquelle est susceptible de s'écouler le liquide.

9. Dispositif selon la revendication 8, **caractérisé en ce que** l'extrémité libre (238) de la coupole (236) est évasée.

10. Dispositif selon la revendication 8 ou 9, **caractérisé en ce que** le sommet du ou des filets de la vis (228) se prolongent jusqu'à la surface extérieure de la coupole (236).

11. Dispositif de pulvérisation selon l'une quelconque des revendications précédentes, **caractérisé en ce qu'**il comprend une seconde surface de diffusion (166, 242).

12. Dispositif de pulvérisation selon la revendication 11, **caractérisé en ce que** la seconde surface de diffusion (166, 242) est concentrique à la première surface de diffusion (130, 216) et disposée à l'intérieur de ladite surface de diffusion (130, 216), le liquide à pulvériser s'écoulant entre lesdites surfaces (130,166; 242, 216).

13. Dispositif de pulvérisation selon la revendication 12, **caractérisé en ce que** l'état de surface de la seconde surface de diffusion (166, 242) est adapté pour limiter les phénomènes de capillarité.

14. Dispositif de pulvérisation selon l'une quelconque des revendications 1 à 13, **caractérisé en ce qu'**il comprend un conduit terminal (184, 224) avec une extrémité évasée susceptible d'être déplacée par rapport à l'arête (132, 218) de la surface de diffusion.

15. Machine agricole équipée d'au moins un dispositif de pulvérisation selon l'une quelconque des revendications 1 à 14.

## Claims

1. A device for spraying a liquid, comprising a diffusion medium (28, 128, 210), disposed in a gaseous stream (26, 126, 212), with at least one diffusion surface (30, 130, 216) over which the liquid to be sprayed is able to flow, having an edge (32, 132, 218) at which there are formed the droplets entrained by the gaseous stream (26, 126, 212), said diffusion surface (30, 130, 216) being driven in rotation by rotation means, **characterised in that** the rotation means comprise a screw (40, 140, 228) having at least one thread (230) at its external surface.

2. A device according to claim 1, **characterised in that** the screw comprises several threads (230).

3. A device according to claim 1 or 2, **characterised in that** the screw has a conical envelope (232).

4. A device according to any one of claims 1 to 3, **characterised in that** it comprises a sleeve (214) channelling the gaseous stream (212) in the form of a nozzle with, in the direction of flow of the stream (212), a convergent part (220) followed by a divergent part (222).

5. A device according to claim 4, **characterised in that** the screw has an envelope (32) substantially tangent to the divergent part (222).

6. A device according to claim 5, **characterised in that** the screw has a conical body (234).

7. A device according to any one of claims 1 to 6, **characterised in that** at least part of the diffusion medium (210) is moulded with the screw (228).

8. A device according to claim 7, **characterised in that** the screw (228) comprises, at its downstream end in the direction of flow of the gaseous stream (212), a substantially spherical portion (236), hereinafter referred to as a cupola, the internal surface of which constitutes a first diffusion surface (216) at which the liquid is able to flow.

9. A device according to claim 8, **characterised in that** the free end (238) of the cupola (236) is splayed.

10. A device according to claim 8 or 9, **characterised in that** the crest of the thread or threads of the screw (228) are extended as far as the external surface of the cupola (236).

11. A spray device according to any one of the preceding claims, **characterised in that** it comprises a second diffusion surface (166, 242).

12. A spray device according to claim 11, **characterised in that** the second diffusion surface (166, 242) is concentric with the first diffusion surface (130, 216) and disposed inside said diffusion surface (130, 216), the liquid to be sprayed flowing between said surfaces (130, 166; 242, 216).

13. A spray device according to claim 12, **characterised in that** the surface finish of the second diffusion surface (166, 242) is adapted to limit phenomena of capillarity.

14. A spray device according to any one of claims 1 to 13, **characterised in that** it comprises an end conduit (184, 224) with a splayed end able to be moved with respect to the edge (132, 218) of the diffusion surface.

15. An agricultural machine equipped with at least one spray device according to any one of claims 1 to 14.

## Patentansprüche

1. Vorrichtung zum Sprühen einer Flüssigkeit mit einem in einem Gasstrom (26, 126, 212) angeordneten Verteilungsträger (28, 128, 210), der mindestens eine Verteilungsfläche (30, 130, 216) aufweist, auf der die zu versprühende Flüssigkeit strömen kann und die eine Kante (32, 132, 218) aufweist, in deren Bereich die vom Gasstrom (26, 126, 212) mitgerissenen Tröpfchen gebildet werden, wobei die Verteilungsfläche (30, 130, 216) durch Drehantriebsmittel drehangetrieben wird, **dadurch gekennzeichnet, dass** die Drehantriebsmittel eine Schraube (40, 140, 228) umfassen, die im Bereich ihrer Außenfläche mindestens ein Gewinde (230) aufweist.

2. Vorrichtung nach Anspruch 1, **dadurch gekennzeichnet, dass** die Schraube mehrere Gewinde (230) umfasst.

3. Vorrichtung nach Anspruch 1 oder 2, **dadurch gekennzeichnet, dass** die Schraube eine konische Mantelfläche (232) aufweist.

4. Vorrichtung nach einem der Ansprüche 1 bis 3, **dadurch gekennzeichnet, dass** sie einen Stutzen (214) umfasst, der den Gasstrom (212) düsenförmig kanalisiert, mit in Strömungsrichtung des Stroms (212) einer Düsenverengung (220) und einer Düsenaufweitung (222).

5. Vorrichtung nach Anspruch 4, **dadurch gekennzeichnet, dass** die Schraube eine die Düsenaufweitung (222) im Wesentlichen tangierende Mantelfläche (32) aufweist.

6. Vorrichtung nach Anspruch 5, **dadurch gekennzeichnet, dass** die Schraube einen konischen Körper (234) aufweist.

7. Vorrichtung nach einem der Ansprüche 1 bis 6, **dadurch gekennzeichnet, dass** mindestens ein Teil des Verteilungsträgers (210) an der Schraube (228) angeformt ist.

8. Vorrichtung nach Anspruch 7, **dadurch gekennzeichnet, dass** die Schraube (228) im Bereich ihres in Strömungsrichtung des Gasstroms (212) stromabwärts gelegenen Endes einen im Wesentlichen kugeligen, im weiteren Verlauf Kuppel genannten Abschnitt (236) umfasst, dessen Innenfläche eine erste Verteilungsfläche (216) darstellt, in deren Bereich die Flüssigkeit strömen kann.

9. Vorrichtung nach Anspruch 8, **dadurch gekennzeichnet, dass** das freie Ende (238) der Kuppel (236) aufgeweitet ist.

10. Vorrichtung nach Anspruch 8 oder 9, **dadurch gekennzeichnet, dass** der Scheitelpunkt des Gewindes bzw. der Gewinde der Schraube (228) sich bis zur Außenfläche der Kuppel (236) erstrecken.

11. Sprühvorrichtung nach einem der vorstehenden Ansprüche, **dadurch gekennzeichnet, dass** sie eine zweite Verteilungsfläche (166, 242) umfasst.

12. Sprühvorrichtung nach Anspruch 11, **dadurch gekennzeichnet, dass** die zweite Verteilungsfläche (166, 242) konzentrisch zur ersten Verteilungsfläche (130, 216) ist und innerhalb dieser Verteilungsfläche (130, 216) angeordnet ist, wobei die zu versprühende Flüssigkeit zwischen den Flächen (130, 166; 242, 216) strömt.

13. Sprühvorrichtung nach Anspruch 12, **dadurch gekennzeichnet, dass** die Oberflächenbeschaffenheit der zweiten Verteilungsfläche (166, 242) die Kapillarwirkung zu begrenzen vermag.

14. Sprühvorrichtung nach einem der Ansprüche 1 bis 13, **dadurch gekennzeichnet, dass** sie ein Endrohr (184, 224) mit einem aufgeweiteten Ende umfasst, das in Bezug auf die Kante (132, 218) der Verteilungsfläche verschieblich gelagert ist.

15. Landwirtschaftliche Maschine, ausgestattet mit mindestens einer Sprühvorrichtung nach einem der Ansprüche 1 bis 14.
